# EUROPEAN PATENT SPECIFICATION

(11) **EP 0 923 010 B1**
(45) Date of publication and mention of the grant of the patent: **09.08.2006**
(21) Application number: 98122521.2
(22) Date of filing: 30.11.1998
(51) Int. Cl.: G05B 19/042, G05B 19/05

(54) **Programmable controller**
Programmierbare Steuerung
Commande programmable

(30) Priority: 12.12.1997 JP 34313897
(43) Date of publication of application: 16.06.1999
(73) Proprietor: Hitachi, Ltd., Chiyoda-ku, Tokyo 101 (JP)
(72) Inventor: Kikuchi, Tadanori, Kikuchi Apt. Room 16, Niigata 950-3116 (JP); Sunaga, Tsutomu, Hitachi Nishi-ryo Room 309,, Kitakanbara-gun, Niigata 959-2604, (JP); Seki, Kenji, Toyosaka-shi, Niigata 950-3321 (JP)
(74) Representative: Altenburg, Udo

(56) References cited:
- EP-A- 0 455 345
- EP-A- 0 496 097
- DE-A- 3 440 917
- US-A- 5 212 631
- PATENT ABSTRACTS OF JAPAN vol. 1997, no. 03, 31 March 1997 (1997-03-31) -& JP 08 286712 A (FANUC LTD), 1 November 1996 (1996-11-01)

## Description

### BACKGROUND OF THE INVENTION

### Technical Field of the Invention

This invention relates to a programmable controller including a plurality of processors for performing sequence operations, which has a port and an interface portion for communicating with a plurality of peripheral apparatus, and enables editing programs and monitoring performances simultaneously.

### Description of Related art

In the prior art, various types of programmable controllers can be found:

US-A-5 212 631 discloses a programmable controller including an input/output module interface, a user memory for storing a user-defined program or a series of such programs to be executed in a sequence, a set of processors for executing the instructions of a stored control program, including a mathematical co-processor, data memories, system memories, a serial port for communicating with a terminal, a port for connection to a local area network including a host computer, and a processor which coordinates the exchange of messages with such external devices.

EP-A-496 097 discloses a programmable controller similar to the one disclosed in US-A-5 212 631, wherein the user memory contains a number of independently executable control programs stored in different areas and wherein the set of processors does not include a mathematical co-processor.

Patent Abstracts of Japan, Vol. 1997, No. 3, March 31 1997 discloses a programmable controller characterized by the fact that a sequence program can be edited while it is being executed.

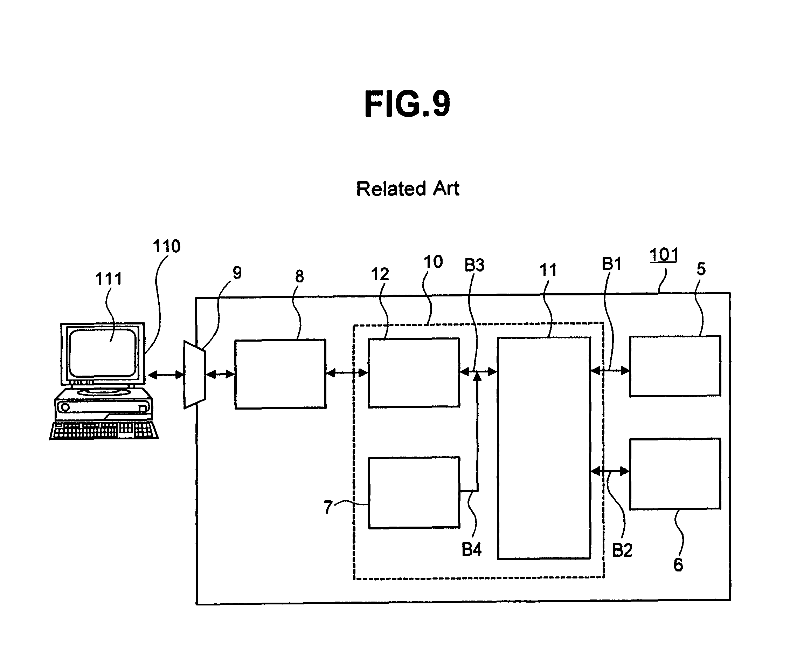

A programmable controller 101 having two processors for performing sequence operations in the prior art is shown in Fig. 9.

As is shown, a central processing portion 10 includes a main processor 11, a sub processor 12 and a system program memory 7. The main processor 11 and the sub processor 12 are connected through a bus B3 and the system program memory (hereinafter system memory) 7 is connected with the bus B3 through a bus B4. Thus, either one of the main processor 11 and the sub processor 12 can access the system memory 7 through the bus B3 and B4. The main processor 11 is connected not only to a data memory 5 through a bus B1 but also to a user program memory (hereinafter user memory) 6 through a bus B2. A system program of the sub processor 12 is stored in the system memory 7, a user program is stored in the user memory 6 and I/O data such as results of operations are stored in the data memory 5. The sub processor 12 is connected to a port 9 through an interface portion 8 so as to communicate with a peripheral apparatus 110. Thus, the programmable controller 101 forms a programmable controller system together with input devices such as contacts, transducers or sensors 1 (not indicated in Fig. 9) and with output devices such as relays, contactors, solenoids or stepping motors 3 (not indicated in Fig. 9).

In this related art, the main processor 11 is designed to operate or handle basic commands of simple bit-operations such as ON-OFF commands for contacts or coils, while the sub processor 12 is designed to operate or handle complicated commands such as arithmetic commands or application commands other than the basic commands. The sub processor 12 also executes respondent operation for the peripheral apparatus 110 and internal operations for the commands from the peripheral apparatus 110. The peripheral apparatus 110 can communicate with the main processor 11 through the port 9 and the interface portion 8 to the user memory 6; which enables to store a ladder-program composed thereby in the user memory 6 and also enables monitoring an operation process.

Since the programmable controller in the related art is equipped with only a single set of the interface portion 8 and the port 9 for communicating with the peripheral apparatus 110, a user is forced to alternate screens of a display 111 of the peripheral apparatus 110 from a monitoring screen to a program-editing screen, or vice versa. For instance, when the user adjusts a performance of the programmable controller system at its start, he or she must change the screen from that of monitoring to that of program-editting to edit or debug the user program, and he or she must change the screen reversely to the monitoring screen from the program-editing screen after confirmation of the performance is over. When the performance of the programmable controller system is not working as is conceived, this procedure i.e., alternating screens, is required repeatedly to find out a cause of an error, which brings about inconvenience and troublesomeness in the trouble shooting.

### SUMMARY OF THE INVENTION

It is therefore an object of the present invention to solve the problems of the related art explained above.

This is achieved by a programmble controller as defined in claim 1.

Advantageous embodiments of the invention are defined in dependent claims 2 and 3.

### BRIEF DESCRIPTION OF THE DRAWINGS

The following represents brief descriptions of the drawings, wherein:
Fig. 1 shows a block diagram of a programmable controller in one embodiment of the present invention.
Fig. 2 shows a chart explaining a flow of a process in a sub processor in one embodiment of the present invention.
Fig. 3 shows a block diagram of a main processor in one embodiment of the present invention.
Fig. 4 shows an example of a program stored in a user program memory in one embodiment of the present invention.
Fig. 5 shows a block diagram of a programmable controller in the second embodiment of the present invention.
Fig. 6 shows a block diagram of a programmable controller in the third embodiment of the present invention.
Fig. 7 shows a block diagram of a programmable controller in the fourth embodiment of the present invention.
Fig. 8 shows a block diagram of a programmable controller forming a basis for all embodiments of the present invention.
Fig. 9 shows a block diagram of a programmable controller in a related art.

### DETAILED DESCRIPTION OF THE INVENTION

Before beginning a detailed description of the subject invention, mention of the following is in order. When appropriate, like reference numerals and characters are used to designate identical, corresponding or similar components in differing figure drawings.

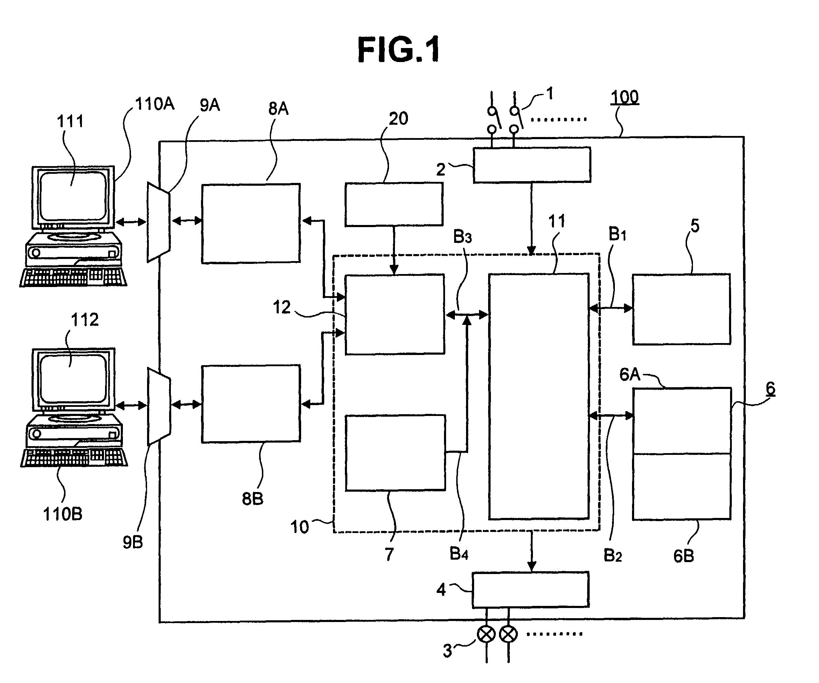

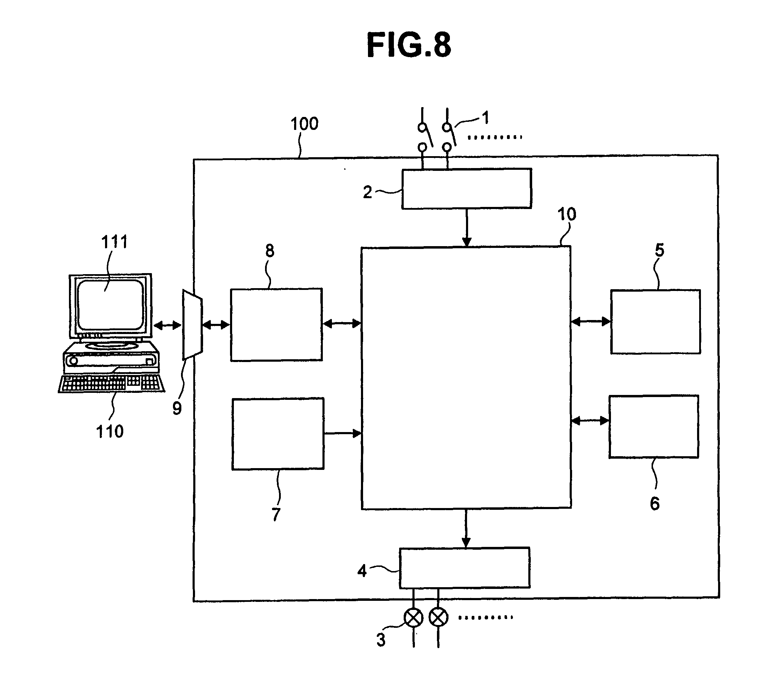

Exemplary embodiments of the present invention will now be explained with reference to Figs. 1 to 8. First, one embodiment of the present invention is explained referring to Figs. 1 through 4, and 8. Fig. 8 discloses a basic construction of a programmable controller (hereinafter PC) 100. The PC 100 generally includes a central processing portion 10, a system program memory (hereinafter system memory) 7, a user program memory (hereinafter user memory) 6, a data memory 5, an input port 2, an output port 4, an interface portion 8 and a port 9.

The central processing portion 10 not only handles operations such as logic operation or arithmetic operation but also controls another elements included in the PC 100. The system memory 7 is connected with the central processing portion 10 and stores a system program including contents and procedures of operation of the central processing portion 10. The user memory 6, which is a read/write memory capable of rewriting the program stored therein, is also connected with the central processing portion 10 and stores the user program. The data memory 5, which is a read/write memory capable of rewriting the program stored therein, is connected with the central processing portion 10 and stores the data such as operation results of the central processing portion 10. The input port 2 is connected with the central processing portion 10 and disposed so as to enable a connection with the input device 1 for transferring an input signal therefrom. The output port 4 is connected with the central processing portion 10 and disposed so as to enable a connection with the output device 3 for transferring an output signal thereto. The input device 1 includes elements such as contacts, transducers or sensors, and the output device 3 includes elements such as relays, contactors, solenoids or stepping motors. The port 9 is disposed so as to enable a connection with the peripheral apparatus 110, and is connected with the central processing portion 10 through the interface portion 8. Further, PC 100 of the present invention has at least one sub processor 12 and at least one additional set of a port 9 and an interface portion 8.

Fig. 1 shows a block diagram of PC of one embodiment of the present invention. PC 100 includes a sub processor 12, a set of a port 9B and an interface portion 8B and a switch 20 in addition to the basic construction. As shown in Fig. 1, the sub processor is disposed within the central processing portion 10 and is connected with the main processor 11 through a bus B3. The sub processor is also connected with the system memory 7 through the bus B3 and a bus B4 so as to be controlled by the system program. The data memory is connected with the central processing portion through a bus B1 and the user memory is connected with the central processing portion 10 through a bus B2. A combination of a port 9A and an interface portion 8A and a combination of the port 9B and the interface portion 8B are connected with the sub processor 12, which enables the sub processor 12 to communicate with two peripheral apparatus 110A and 110B. In this embodiment, the peripheral apparatus 110A has a display screen 111 and is disposed so as to be connected with the port 9A. Similarly, the peripheral apparatus 110B has a display 112 and is disposed so as to be connected with the port 9B. The user memory is divided into a plurality of areas corresponding to the numbers of the sets of the port 9 and the interface portion 8, i.e., the numbers of the peripheral apparatus 110 to be connected. In this embodiment, the user memory is divided into two areas 6A, 6B for storing the user programs composed by the user using the peripheral apparatus 110A, 110B respectively. The switch 20 sets the numbers of the user programs to be executed, sets a destination of the user program within the user memory 6, i.e., 6A or 6B, and selects the user program to be executed by the sub processor 12 from those stored in the areas of the user memory 6A and 6B. Since the sub processor 12 controls communication of the first port 9A and the second port 9B with the memory areas 6A,6B, the first peripheral apparatus 110A is capable of accessing to the memory areas 6A, 6B through the port 9A and the second peripheral apparatus 110B is capable of accessing to the memory areas 6A, 6B through the port 9B. Thus, each of the user program composed by the user using the peripheral apparatus 110A and the user program composed by the user using the peripheral apparatus 110B is taken into the sub processor 12 via interface portion 8A, 8B respectively, and is stored in either one of the areas of the user memory 6A, 6B according to the destination set by the switch 20. When the sub processor 12 performs a sequence operation, it executes selected one of the user programs stored in the user memory 6A, 6B according to the setting of the switch 20.

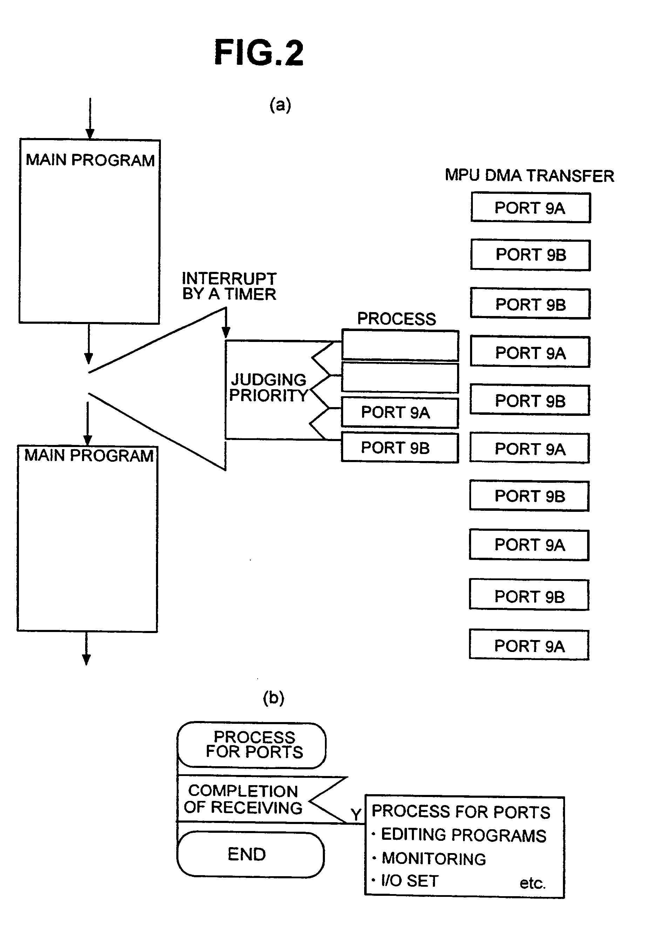

Fig. 2 shows a chart explaining a flow of a process in a sub processor in one embodiment of the present invention. As is shown in Fig.2 (a), the sub processor executes a main program stored in the system memory 7. It also performs a direct memory access (hereinafter DMA) transfer from the peripheral apparatus 110A, 110B in parallel to the execution of the main program. When the sub processor performs the DMA transfer, data from the peripheral apparatus 110A, 110B are received at ports 9A, 9B respectively, and the sub processor 12 processes the data at ports 9A, 9B and stores contents of the process for the data 9A, 9B in different memory area respectively. At this time, the sub processor 12 performs an interrupt for the main program by a timer, and judges priority in the processes, and performs the process having the highest priority. As is shown in Fig. 2 (b), the sub processor judges a completion of receiving on a communication protocol. When at least either one of the ports 9A, 9B is receiving data from corresponding peripheral apparatus 110A, 110B, the sub processor 12 performs other jobs. When receiving of the data is completed, the sub processor 12 executes performance such as editing the program, monitoring, and I/O set according to a communication command as a process for ports.

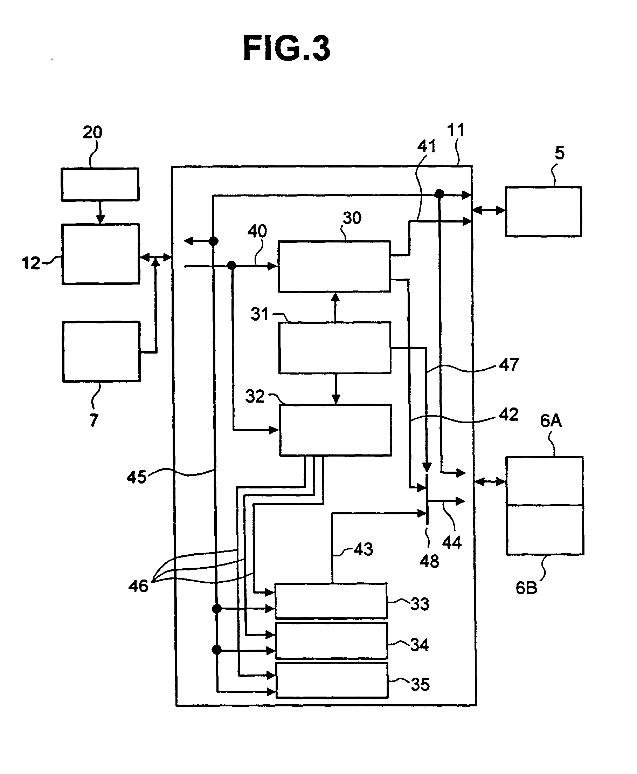

A construction of the main processor 11 is shown in Fig. 3. The main processor 11 includes an address generator 30, a controller 31, a decoder 32, a program counter register 33, a program address register A 34 and a program address register B 35. The controller 31 is connected with the address generator 30 and the decoder 32 so as tobe able to communicate with either of them. Both of the address generator 30 and the decoder 32 are connected with the sub processor 12 through a bus 40. The address generator 30 is connected with the data memory 5 through a bus 41 and also connected with the user memory 6 through a bus 42, a selector 48 and a bus 44. The decoder 32 is connected with the program counter 33, the program address register A 34 and the program address register B 35 through buses 46. The program counter 33, the program address register A 34 and the program address register B 35 are connected with the data memory 5 and the user memory 6 through a bus 45. The program counter 33 is also connected with the user memory 6 through a bus 43, the selector 48 and the bus 44. The controller 31 is connected with the user memory through a bus 47, the selector 48 and the bus 44. When the sub processor accesses the user program 6A or 6B, an address data is transferred to the address generator 30 within the main processor 11, where the address data is decoded and an address signal is generated and outputted on the bus 42. This address signal represents a rewritable space address within the user memory 6A and 6B. In this embodiment, the user memory 6A and 6B is constructed by dividing the memory 6 according to an address of the memory area. The user memory 6A, 6B can also be constructed by individual memory chips. The sub processor 12 can access either one of the user memory by changing the address. The address generator 30 also generates an address in the data memory 5 and outputs on the bus 41.

The memory area in the user memory 6A, 6B is divided by the address, and an information about this division is controlled by an address that represents the first position of the divided memory area (hereinafter head address). The sub processor 12 stores this head address within the the program address register A 34 and the program address register B 35 beforehand. The sub processor 12 refers to the head address in case of accessing the user program 6A, 6B by a request of the peripheral apparatus 110A, 110B. For instance, in case of referring to the N th (N is a positive integer) step of the user program, the sub processor 12 accesses an address which is N ahead from the head address stored in the program address register A 34.

When the main processor 11 executes the user program, the sub processor 12 stores a head address of the user program to be executed in the program counter register 33. When the main processor 11 is started, the main processor 11 executes the user program sequentially counting up the program counter register 33. The contents of the program counter register 33 is supplied to the main procressor 11 as an address of the user memory 6A, 6B. The main processor can access the program counter register 33, the program address register A 34 and the program address register B 35, when they are selected by respective select signals 46 generated in the decoder 32 and outputted on the bus 46 in accordance with a signal outputted on bus 40 by the sub processor 12.

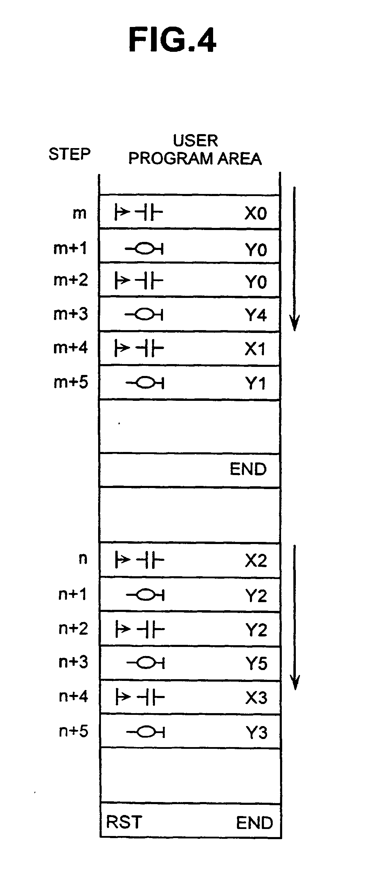

As shown in Fig. 4, the user memory 6A, 6B are divided into a plurality of areas (in this case, two areas). The first position of the divided memory area has its head address respectively, and the sub processor 12 controls the area defined from the head address "m" or "n" to the last step including "END" as a user program. A plurality of user programs defined above are stored in the user memory 6.

As described above, the user memory 6 (6A, 6B) has a function of storing a plurality of user programs each including a head address, the sub processor 12 has a function of being capable of accessing either one of the divided areas of the user memory. The sub processor 12 also has a function of communicating with the peripheral apparatus 110A, 110B. In this invention, these functions are combined, which enables the peripheral apparatus 110A, 110B to access the divided areas 6A, 6B of the user memory 6 through the sub processor 12 respectively, and to display contents of the area 6A, 6B on their display screens 111, 112 respectively. Thus, the peripheral apparatus can perform different kind of processes or jobs at the same time. And the programmable controller in this embodiment can perform monitoring and editing of the program at the same time, when a plurality of peripheral apparatus each having a display screen are connected.

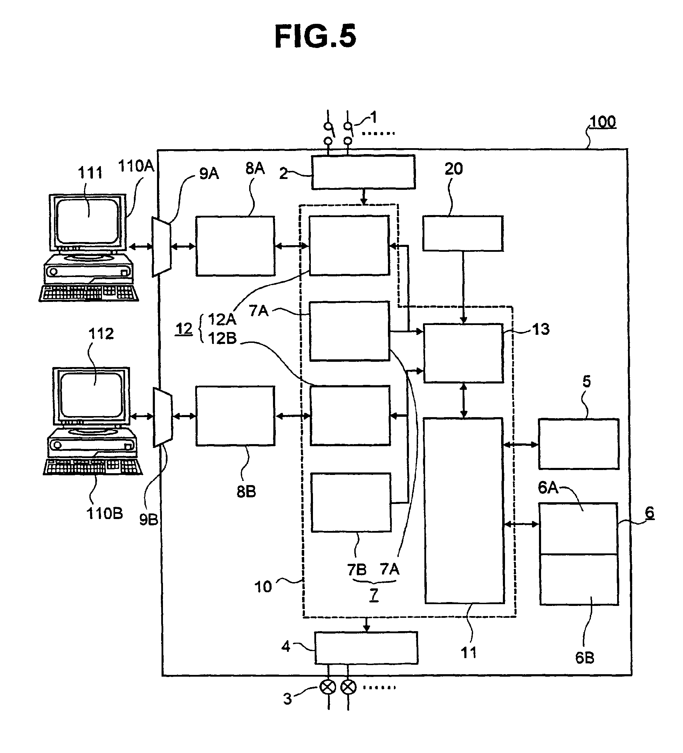

The second embodiment of the present invention is explained referring to Fig. 5.

In this embodiment, the PC 100 is also capable of connecting two peripheral apparatus 110A, 110B. PC 100 includes a sub processor 12 which is divided in two sub processors 12A, 12B, two sets of port and interface portion, i.e., a port 9A and an interface portion 8A and a port 9B and an interface portion 8B, a system memory 7 which is divided into two system memories 7A, 7B, a main processor 11, a bus controller 13, a switch 20, a data memory 5, a user memory divided into two areas 6A, 6B, an input port 2, and an output port 4. As shown in Fig. 5, the sub processors 12A, 12B are disposed within the central processing portion 10 and are connected with the main processor 11 through the bus controller 13. The bus controller 13 controls and switches the bus in such a manner that the sub processors can read the program to be processed when the sub processors 12A, 12B access the user memories 6A, 6B respectively or when the sub processors 12A, 12B accesses the data memory 5. The sub processor 12A is connected with the system memory 7A and the sub processor 12B is connected with the system memory 7B so as to be controlled by the system program. The system memory 7A stores a first system program and the system memory 7B stores a second system program. The first system program is not necessarily the same to the second system program. The sub processors 12A, 12B are connected with the main processor 11 through the bus controller 13. The data memory 5 is connected with the central processing portion 10 hrough a bus and the user memory 6 is connected with the central processing portion 10 through a bus. The combination of the port 9A , the interface portion 8A and the sub processor 12A enables the sub processor 12A to communicate with the peripheral apparatus 110A. The combination of the port 9B the interface portion 8B and the sub processor 12B enables the sub processor 12B to communicate with the peripheral apparatus 110B. The peripheral apparatus 110A, 110B have the display screens 111, 112 respectively. The user memory 6 is divided into two areas 6A, 6B for storing the user programs composed by the user using the peripheral apparatus 110A, 110B respectively. The switch 20 is connected with the bus controller 13 and sets the numbers of the user programs to be executed, sets a destination of the user program within the user memory 6, i.e., 6A or 6B, and selects the user program to be executed by the sub processor 12 from those stored in the areas of the user memory 6A and 6B. An information of many kinds of setting for the user memory 6A, 6B by the switch 20 is stored in a register (not shown in Fig.5) in the bus controller 13, which enables the sub processors 12A, 12B to read the information of the switch 20 by accessing the register. Thus, each of the user program composed by the user using the peripheral apparatus 110A and the user program composed by the user using the peripheral apparatus 110B is taken into the sub processor 12A, 12B via interface portion 8A, 8B respectively, and is stored in either one of the areas of the user memory 6A, 6B according to the destination set by the switch 20. When the sub processor 12 performs a sequence operation, it executes selected one of the user programs stored in the user memory 6A, 6B according to the setting of the switch 20. In this embodiment, efficiency of monitoring and editing is improved.

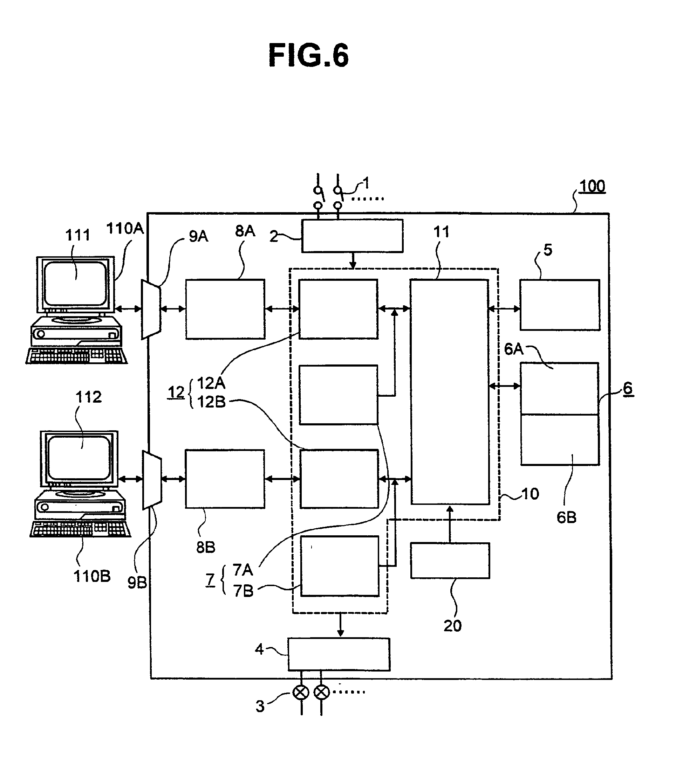

The third embodiment of the present invention is explained referring to Fig. 6.

In this embodiment, the PC 100 is also capable of connecting two peripheral apparatus 110A, 110B. PC 100 includes a sub processor 12 which is divided in two sub processors 12A, 12B, two sets of port and interface portion, i.e., a port 9A and an interface portion 8A and a port 9B and an interface portion 8B, a system memory 7 which is divided into two system memories 7A, 7B, a main processor 11, a switch 20, a data memory 5, a user memory divided into two areas 6A, 6B, an input port 2, and an output port 4. As shown in Fig. 6, the sub processors 12A, 12B are disposed within the central processing portion 10 and are connected with the main processor 11. The sub processor 12A is connected with the system memory 7A and the sub processor 12B is connected with the system memory 7B so as to be controlled by the system program. The system memory 7A stores a first system program and the system memory 7B stores a second system program. The first system program is not necessarily the same to the second system program. The sub processors 12A, 12B are connected with the main processor 11. The data memory 5 is connected with the central processing portion 10 hrough a bus and the user memory 6 is connected with the central processing portion 10 through a bus. The combination of the port 9A , the interface portion 8A and the sub processor 12A enables the sub processor 12A to communicate with the peripheral apparatus 110A. The combination of the port 9B the interface portion 8B and the sub processor 12B enables the sub processor 12B to communicate with the peripheral apparatus 110B. The peripheral apparatus 110A, 110B have the display screens 111, 112 respectively. The user memory 6 is divided into two areas 6A, 6B for storing the user programs composed by the user using the peripheral apparatus 110A, 110B respectively. The switch 20 is connected with the main processor 11 and sets the numbers of the user programs to be executed, sets a destination of the user program within the user memory 6, i.e., 6A or 6B, and selects the user program to be executed by the sub processor 12 from those stored in the areas of the user memory 6A and 6B. An information of many kinds of setting for the user memory 6A, 6B by the switch 20 is stored in a register (not shown in Fig.6) in the main processor 11, which enables the sub processors 12A, 12B to read the information of the switch 20 by accessing the register. Thus, each of the user program composed by the user using the peripheral apparatus 110A and the user program composed by the user using the peripheral apparatus 110B is taken into the sub processor 12A,12B via interface portion 8A, 8B respectively, and is stored in either one of the areas of the user memory 6A, 6B according to the destination set by the switch 20. When the sub processor 12 performs a sequence operation, it executes selected one of the user programs stored in the user memory 6A, 6B according to the setting of the switch 20. In this embodiment, efficiency of monitoring and editing is improved. Further this embodiment can simplify its construction because no bus controller 13 is employed when compared to the second embodiment.

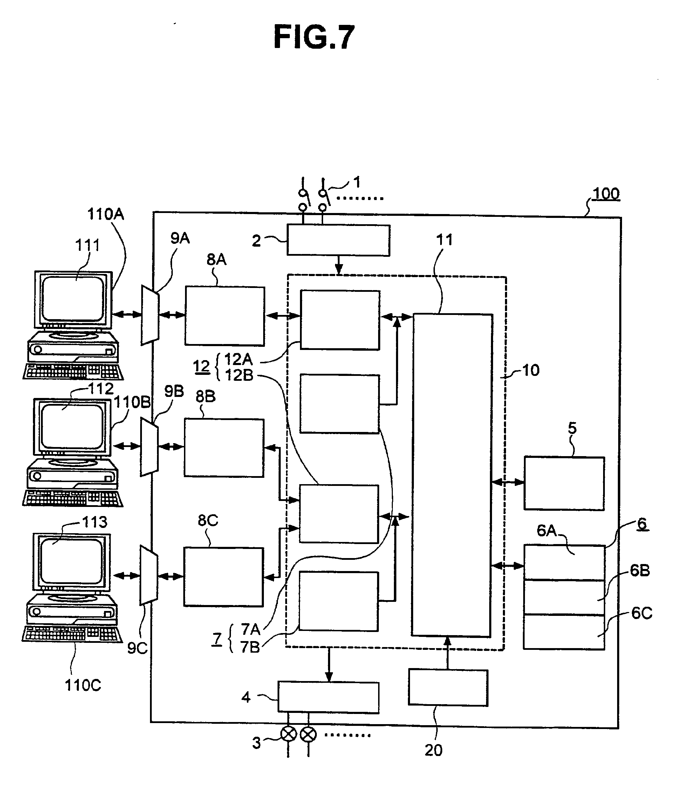

The fourth embodiment of the present invention is explained referring to Fig. 7.

In this embodiment, the PC 100 is capable of connecting three peripheral apparatus 110A, 110B, 110C. The peripheral apparatus 110C has a display screen 113 similarly to the peripheral apparatus 110A, 110B. In order to connect three peripheral apparatus, PC 100 includes an extra set of a port 9C and an interface portion 8C in addition to the two sets of port and interface portion, i.e., the port 9A and the interface portion 8A and the port 9B and the interface portion 8B, disclosed in Fig.6. In this embodiment, the sub processor 12B communicates with two peripheral apparatus 110B, 110C, through the port 9B and the interface portion 8B and the port 9C and the interface portion 8C respectively. The user memory 6 is devided into three areas 6A, 6B, 6C for storing the user programs composed by the user using the peripheral apparatus 110A, 110B, 110C respectively. The switch 20 is connected with the main processor 11 and sets the numbers of the user programs to be executed, sets a destination of the user program within the user memory 6, i.e., 6A, 6B or 6C, and selects the user program to be executed by the sub processor 12 from those stored in the areas of the user memory 6A, 6B and 6C. An information of many kinds of setting for the user memory 6A, 6B, 6C by the switch 20 is stored in a register (not shown in Fig.7) in the main processor 11, which enables the sub processors 12A, 12B, to read the information of the switch 20 by accessing the register. Thus, the user program composed by the user using the peripheral apparatus 110A is taken into the sub processor 12A via interface portion 8A and the user programs composed by the user using the peripheral apparatus 110B, 110C are taken into the sub processor 12B via interface portion 8B. Each of these programs is stored in either one of the areas of the user memory 6A, 6B, 6C according to the destination set by the switch 20. The other construction is the same as the third embodiment.

As described above, above embodiments can perform monitoring and program-editing simultaneously, which provides a programable controller having high efficiency.

## Claims

1. A programmable controller including an input port (2) for taking in an external signal, an output port (4) for outputting a signal for driving an external load, a first port (9A) for communicating with a first peripheral apparatus (110A), a first interface portion (8A) connected with said first port (9A), a user program memory (6) for storing a user program, a main processor (11) for performing an operation according to said user program, a data memory (5) for storing a result of said operation performed by said main processor (11), a sub processor (12) disposed so as to communicate with said first interface portion (8A) and said main processor (11), and a system program memory (7) for storing a system program controlling said main processor (11) and said sub processor (12), wherein said main processor handles a basic command and said sub processor handles an application command, **characterized in that** said programmable controller further includes a second port (9B) for communicating with a second peripheral apparatus (110B), and a second interface portion (8B) connected with said second port (9B), wherein said user program memory (6) is divided into at least two user memory areas (6A, 6B), wherein a switch (20) being connected with said sub processor (12) is provided, which sets the numbers of the user programs to be executed, sets a destination of the user program within the user memory areas (6A, 6B) and selects the user program to be executed by the sub processor (12) from those stored in the areas of the user memory (6A, 6B), and wherein said sub processor (12) controls communication of said first port (9A) and said second port (9B) with one user memory area (6A) and the other user memory area (6B), respectively, and a program can be edited using one of said peripheral apparatus while the results of its execution can be at the same time monitored using the other peripheral apparatus.

2. A programmable controller according to claim 1, wherein the sub processor (12) consists of first and second sub processors (12A, 12B), wherein said first port (9A) communicates with said one user memory area (6A) controlled by said first sub processor (12A) and said second port (9B) communicates with said other user memory area (6B) controlled by said second sub processor (12B).

3. A programmable controller according to one of the preceding claims, further including a first peripheral apparatus (110A) an a second peripheral apparatus (110B), wherein said first peripheral apparatus is capable of monitoring a performance and editing said user program, said first peripheral apparatus is capable of accessing to said user memory areas (6A, 6B) through said port (9A), said second peripheral apparatus is capable of monitoring a performance and editing said user program, and said second peripheral apparatus is capable of accessing to said user memory areas (6A, 6B) through said port (9B).

## Patentansprüche

1. Programmierbare Steuereinheit, welche einen Eingabeanschluss (2) beinhaltet zum Erfassen eines externen Signals, einen Ausgabeanschluss (4) zum Ausgeben eines Signals zum Ansteuern einer externen Last, einen ersten Anschluss (9A) zum Kommunizieren mit einem ersten Peripheriegerät (110A), einen ersten Schnittstellenabschnitt (8A), welcher mit dem ersten Anschluss (9A) verbunden ist, einen Benutzerprogrammspeicher (6) zum Speichern eines Benutzerprogramms, einen Hauptprozessor (11) zum Ausführen einer Operation gemäß des Benutzerprogramms, einen Datenspeicher (5) zum Speichern eines Ergebnisses der Operation, welche von dem Hauptprozessor (11) ausgeführt wird, einen Unterprozessor (12), welcher derart angeordnet ist, dass er mit dem ersten Schnittstellenabschnitt (8A) und dem Hauptprozessor (11) kommuniziert, und einen Systemprogrammspeicher (7) zum Speichern eines Systemprogramms, welches den Hauptprozessor (11) und den Unterprozessor (12) steuert, wobei der Hauptprozessor einen Grundbefehl bearbeitet und der Unterprozessor einen Anwendungsbefehl bearbeitet, **dadurch gekennzeichnet, dass** die programmierbare Steuereinheit weiterhin einen zweiten Anschluss (9B) beinhaltet zum Kommunizieren mit einem zweiten Peripheriegerät (110B), und einen zweiten Schnittstellenabschnitt (8B), welcher verbunden ist mit dem zweiten Anschluss (9B), wobei der Benutzerprogrammspeicher (6) unterteilt ist in mindestens zwei Benutzerspeicherbereiche (6A, 6B), wobei ein Schalter (20), welcher verbunden ist mit dem Unterprozessor (12) zur Verfügung gestellt wird, welcher die Anzahl der Benutzerprogramme, die ausgeführt werden sollen, setzt, eine Zieladresse des Benutzerprogramms innerhalb der Benutzerspeicherbereiche (6A, 6B) setzt und das Benutzerprogramm, welches von dem Unterprozessor (12) ausgeführt werden soll, aus denen auswählt, welche in den Bereichen des Benutzerspeichers (6A, 6B) gespeichert sind, und wobei der Unterprozessor (12) die Kommunikation des ersten Anschlusses (9A) und des zweiten Anschlusses (9B) mit jeweils dem einen Benutzerspeicherbereich (6A) und dem anderen Benutzerspeicherbereich (6B) steuert, und wobei ein Programm durch Benutzen eines Peripheriegerätes editiert werden kann, während die Ergebnisse von dessen Ausführung gleichzeitig überwacht werden können durch Benutzen des anderen Peripheriegerätes.

2. Programmierbare Steuereinheit nach Anspruch 1, wobei der Unterprozessor (12) einen ersten und einen zweiten Unterprozessor (12A, 12B) beinhaltet, wobei der erste Anschluss (9A) mit dem einen Benutzerspeicherbereich (6A), welcher von dem ersten Unterprozessor (12A) gesteuert wird, kommuniziert und der zweite Anschluss (9B) mit dem anderen Benutzerspeicherbereich (6B), welcher von dem zweiten Unterprozessor (12B) gesteuert wird, kommuniziert.

3. Programmierbare Steuereinheit nach einem der vorhergehenden Ansprüche, welche weiterhin ein erstes Peripheriegerät (110A) und ein zweites Peripheriegerät (110B) beinhaltet, wobei das erste Peripheriegerät geeignet ist zum Überwachen eines Leistungsverhaltens und Editieren des Benutzerprogramms, wobei das erste Peripheriegerät geeignet ist zum Zugreifen auf die Benutzerspeicherbereiche (6A, 6B) über den Anschluss (9A), wobei das zweite Peripheriegerät geeignet ist zum Überwachen eines Leistungsverhaltens und Editieren des Benutzerprogramms, und wobei das zweite Peripheriegerät geeignet ist zum Zugreifen auf die Benutzerspeicherbereiche (6A, 6B) über den Anschluss (9B).

## Revendications

1. Commande programmable incluant un port d'entrée (2) pour recevoir un signal externe, un port de sortie (4) pour délivrer en sortie un signal pour commander une charge externe, un premier port (9A) pour communiquer avec un premier dispositif périphérique (110A), une première partie d'interface (8A) connectée audit premier port (9A), une mémoire de programme utilisateur (6) pour mémoriser un programme utilisateur, un processeur principal (11) pour exécuter une opération conformément audit programme utilisateur, une mémoire de données (5) pour mémoriser un résultat de ladite opération exécutée par ledit processeur principal (11), un sous-processeur (12) disposé de manière à communiquer avec ladite première partie d'interface (8A) et ledit processeur principal (11), et une mémoire de programme système (7) pour mémoriser un programme système commandant ledit processeur principal (11) et ledit sous-processeur (12), dans laquelle ledit processeur principal traite une instruction de base et ledit sous-processeur traite une instruction d'application, **caractérisée en ce que** ladite commande programmable inclut de plus un second port (9B) pour communiquer avec un second dispositif périphérique (110B), et une seconde partie d'interface (8B) connectée audit second port (9B), ladite mémoire de programme utilisateur (6) est divisée en au moins deux zones de mémoire utilisateur (6A, 6B), un commutateur (20) est connecté audit sous-processeur (12), définit les nombres des programmes utilisateur à exécuter, définit une destination du programme utilisateur à l'intérieur des zones de mémoire utilisateur (6A, 6B) et sélectionne le programme utilisateur à exécuter par le sous-processeur (12) parmi ceux mémorisés dans les zones de mémoire utilisateur (6A, 6B), ledit sous-processeur (12) commande une communication dudit premier port (9A) et dudit second port (9B) avec une zone de mémoire utilisateur (6A) et l'autre zone de mémoire utilisateur (6B), respectivement, et un programme peut être édité en utilisant l'un desdits dispositifs périphériques pendant que les résultats de son exécution peuvent être en même temps contrôlés en utilisant l'autre dispositif périphérique.

2. Commande programmable selon la revendication 1, dans laquelle le sous-processeur (12) est constitué de premier et second sous-processeurs (12A, 12B), dans laquelle ledit premier port (9A) communique avec ladite une zone de mémoire utilisateur(6A) commandée par ledit premier sous-processeur (12A) et ledit second port (9B) communique avec ladite autre zone de mémoire utilisateur (6B) commandée par ledit second sous-processeur (12B).

3. Commande programmable selon l'une quelconque des revendications précédentes, incluant de plus un premier dispositif périphérique (110A) et un second dispositif périphérique (110B), ledit premier dispositif périphérique étant capable de contrôler une performance et éditer ledit programme utilisateur, ledit premier dispositif périphérique étant capable d'accéder auxdites zones de mémoire utilisateur (6A, 6B) via ledit port (6A), ledit second dispositif périphérique étant capable de contrôler une performance et éditer ledit programme utilisateur, et ledit second dispositif périphérique étant capable d'accéder auxdites zones de mémoire utilisateur (6A, 6B) via ledit port (6B).
